# EUROPÄISCHE PATENTSCHRIFT

(11) **EP 1 783 010 B1**
(45) Veröffentlichungstag und Bekanntmachung des Hinweises auf die Patenterteilung: **25.03.2009**
(21) Anmeldenummer: 05110414.9
(22) Anmeldetag: 07.11.2005
(51) Int. Cl.: B60R 22/02

(54) **Abnehmbare Sicherheitsgurt-Befestigung**
Removable safety belt fastening
Fixation de ceinture de sécurité détachable

(43) Veröffentlichungstag der Anmeldung: 09.05.2007
(73) Patentinhaber: Ford Global Technologies, LLC, Dearborn, MI 48126 (US)
(72) Erfinder: Huhn, Henrik M., 40545 Duesseldorf (DE); Dörfler, Thomas, 50374, Erftstadt (DE)
(74) Vertreter: Drömer, Hans-Carsten

(56) Entgegenhaltungen:
- EP-A- 0 940 305
- DE-A1- 4 415 635
- FR-A- 2 757 812
- US-B1- 6 302 442

## Beschreibung

Die Erfindung betrifft ein Fahrzeug mit einem abnehmbaren Dreipunkt-Sicherheitsgurt für einen zugeordneten Sitz, gemäß dem Oberbegriff des Anspruchs 1.

Derartige Dreipunkt-Sicherheitsgurte sind bekannt. Ein über das Becken und über eine Schulter des Fahrzeuginsassen geführter Dreipunkt-Sicherheitsgurt bildet mit seinem Gurtband einen Beckengurt und einen Schultergurt, und ist an drei Lastaufnahmepunkten bzw. Befestigungspunkten gehaltert und üblicherweise mit einer Gurtrolle wenigstens für den Schultergurt versehen, wobei die Gurtrolle das Gurtband federkraftbetrieben aufrollt und entgegen der Aufrollkraft eine Teillängen desselben freigeben kann. Im Falle eines Unfalls oder einer starken Verzögerung bewirkt die Gurtrolle eine Blockade des Gurtbandes, so daß die Teillänge nicht freigegeben wird.

Die Gurtrolle für einen Vordersitz ist bei bekannten Systemen in einem unteren Seitenwandbereich angeordnet, wobei das Gurtband über eine Umlenkeinrichtung in Schulterhöhe geführt ist. Für einen Mittelsitz entfällt beispielsweise die Möglichkeit, eine benachbarte Fahrzeugsäule als Halterung und Lastaufnahmepunkt für das Gurtband zu verwenden, so daß die am freien Ende des Gurtbandes angeordnete Gurtrolle entweder am Boden des Fahrzeugs, insbesondere hinter dem Sitz, im Karosseriedach oder unter bzw. auf einer Hutablage oder im Kofferraum angeordnet sein kann. Ist eine im Fond eines Fahrzeugs vorhandene Sitzbank umzuklappen, sollte, sofern sich das Dreipunkt-Gurtsystem ansonsten nicht als hinderlich erweist, das Gurtsystem so weit wie möglich entfernt werden.

Die FR 2 757 812 offenbart einen Dreipunkt-Sicherheitsgurt, dem an einen ersten Befestigungspunkt eine Gurtrolle zugeordnet ist. Mit einer Gurtzunge ist der Gurt an einer zur Gurtrolle gegenüberliegenden Seite des Sitzes mit dem zugeordneten Gurtschloss verbindbar, wobei eine zweite Gurtzunge vorgesehen ist, die lösbar mit einem Gurtschloss verbindbar ist, welches oberhalb einer Rückenlehne des Sitzes angeordnet ist. Dieses Gurtschloss kann mit einer Fahrzeugkarosserie verbunden sein.

Die EP 0 940 305 A2 offenbart ebenfalls einen Dreipunkt-Sicherheitsgurt. Hier ist eine drehbare Umlenkeinrichtung mit der Fahrzeugkarosserie verbunden. Die Umlenkeinrichtung ist oberhalb des Sitzes angeordnet. Die Gurtrolle ist seitlich unterhalb des freien Endes der Rückenlehne des Sitzes mit der Fahrzeugkarosserie, bevorzugt mit der D- bzw. C-Säule verbunden, so dass das Gurtband über die in Fahrzeuglängsrichtung drehbare Umlenkeinrichtung zum Sitz geführt wird.

Die DE 44 15 635 A1 offenbart eine Sicherheitsgurtanordnung mit einem sich zum Fahrzeugdach erstreckenden Schultergurt. Die Gurtrolle ist an einem von der Stelle des Fahrzeugdachs entfernten, außerhalb der Nutzhöhe des Fahrzeuginnenraums befindlichen Ort festgelegt. Der Schultergurt ist, abgedeckt durch einen Dachhimmel, durch Umlenkungen von der besagten Stelle zu dem besagten Ort geführt.

Die US 6,334,628 B1 offenbart eine im Karosseriedach eines Kraftfahrzeugs angeordnete Gurtrolle für einen Mittelsitz mit einem Gurt, der jeweils mittels lösbarer Verbindungen mit den beiden im Bereich der Sitzbankfläche vorgesehenen Gurtschlössern zu verbinden ist. Die US 6,116,696 schlägt ein Dreipunkt-Gurtsystem mit einer auf der Hutablage befestigten Gurtrolle vor, die wiederum einen Gurt aufweist, der jeweils lösbar mit den beiden im Bereich der Sitzbankfläche vorgesehenen Gurtschlössem zu verbinden ist.

Handelt es sich darüber hinaus um ein vorbestimmt modifizierbares Fahrzeug mit einem im Bedarfsfalle aus diesem entfernbaren Fahrzeugsitz, erweist sich die bekannte Anbringung des Sicherheitsgurtes als ungünstig. Um die im Crash auftretenden Kräfte geeignet aufzunehmen, befinden sich einerseits die unteren Befestigungspunkte, insbesondere ein festes Ende des Gurtes zur Aufnahme der Last, meist am Sitz, wobei andererseits der Gurt fest mit der Karosserie verbunden ist. Dadurch wird aber die Entnahme des Sitzes erschwert. Zur Lösung wird beispielsweise vorgeschlagen, sämtliche Lastaufnahmepunkte bzw. Befestigungspunkte und damit das gesamte Gurtsystem unmittelbar am Sitz anzubringen. Dies führt jedoch dazu, daß im Falle eines Unfalls die Sitzstruktur insbesondere im Rückenlehnenbereich vergleichsweise großen Belastungen ausgesetzt wird, was eine Verstärkung des Sitzes und somit eine für die Entnahme des Sitzes hinderliche Gewichtszunahme zur Folge hat. Ist beispielsweise die Gurtrolle in der Rückenlehne zu integrieren, fehlt zudem bei der raumsparenden Auslegung des Innenraumes der Fahrzeuge zumeist der dafür erforderliche Platz in der Rückenlehne. Dies gilt umso mehr, wenn Vorrichtungen zur Anpassung der Höhenpositionierung des Lastaufnahmepunktes bzw. des Befestigungspunktes vorzusehen sind. Zudem ist die Position der Rückenlehne in Bezug auf die Schulter des Fahrzeuginsassen zumeist zu niedrig, so daß die Positionierung des Lastaufnahmepunktes bzw. des Befestigungspunktes im Bereich der Lehne hinsichtlich crashdynamischer Überlegungen ungünstig ist und meist aufwendige Anbauten an der Rückenlehne zur Höhenanpassung erforderlich sind. Letztere erschweren meist die Sicht des Fahrers nachteilig nach hinten, so daß eine derartige Vorrichtung aus sicherheitstechnischer Sicht nur in besonderen Ausnahmesituationen in Frage kommt. Ist der gesamte Gurt in der Bestuhlung des Kraftfahrzeugs vorgesehen, müssen bei Verwendung von elektrisch zündbaren Gurtstraffern zudem elektrische Kontakte nachteilig gelöst bzw. geschlossen werden, wodurch der Montage- und Demontageaufwand erhöht ist, was aufgrund der im Allgemeinen schlechten Zugänglichkeit zu Fehlbedienungen führt.

Um diese Nachteile teilweise zu umgehen, schlagen die EP 0 528 438 A1 und US 4,702,491 ein Dreipunkt-Sicherheitsgurtsystem für einen demontierbaren Fahrzeugsitz vor, wobei als untere Lastaufnahmepunkte bzw. Befestigungspunkte für den Gurt jeweils eine im Bereich der Sitzfläche befestigte Gurtrolle und gegenüberliegend ein Gurtschloß vorgesehen sind, wobei der obere Lastaufnahmepunkt für den Gurt in Form einer Umlenkeinrichtung ausgebildet ist, die lösbar mit der Fahrzeugkonstruktion verbunden ist. Hier wirkt die Gurtkraft in nachteiliger Weise aufgrund der Umlenkung doppelt auf die Karosserie ein. Es entsteht ein Flaschenzugeffekt, der eine erheblich festere Auslegung des oberen Lastaufnahmepunktes erforderlich macht.

Der Gurt weist ferner ein für die lösbare Verbindung mit dem Gurtschloß vorgesehene Gurtzunge auf, die am Gurt wenigstens teilweise verschiebbar angeordnet ist. Durch Lösen der Verbindung der Umlenkeinrichtung von der Karosserie ist das Sicherheitsgurtsystem mit dem Sitz dem Fahrzeug zu entnehmen.

Die gezeigten Ausführungen weisen den Nachteil auf, daß die im Vergleich schwere Gurtrolle das Gewicht des Sitzes insbesondere bei der Entnahme des Sitzes erschwert. Zudem kann es leicht zu Beschädigungen der vergleichsweise empfindlichen Gurtrolle kommen, insbesondere wenn der Sitz entnommen wird und Kollisionen mit der weiteren Bestuhlung oder anderen Teilen nicht vermieden werden können. Eine Unterbringung der Gurtrolle unter dem Sitz gestaltet sich demgegenüber zumeist schwierig, da ansonsten die Bauhöhe des Sitzes und aufgrund des erforderlichen Kopfraumes die Fahrzeughöhe hinsichtlich des Kraftstoffverbrauchs nachteilig zunimmt. Zudem erweist sich die Gurtführung dahin gehend als nachteilig, da bei ungenau ausgerichteter Positionierung der Umlenkeinrichtung oder bei einem wandernden Gurt dieser an den seitlichen Begrenzungen der Umlenkeinrichtung gerieben wird, so daß es zur Beschädigung des Gurtes kommen kann.

Sind, wie oben bereits erwähnt, elektrisch zündbare Gurtstraffer in der Gurtrolle angeordnet, müssen deren elektrische Versorge- und Auslöseleitungen ungünstig über den Boden dem Sitz zugeführt werden. Ferner gestaltet sich die De- und Neukontaktierung des Sitzes aufgrund der niedrigen und ungünstigen Anordnung schwierig.

Der vorliegenden Erfindung liegt die Aufgabe zugrunde, ein Fahrzeug, insbesondere einen Dreipunkt-Sicherheitsgurt der eingangs genannten Art mit einfachen Mitteln dahin gehend zu verbessern, daß die vorgenannten Nachteile vermieden werden, und insbesondere die Krafteinleitung aufgrund von Gurtkräften in den Fahrzeugaufbau zu verringern, das Gewicht der Sitze zu reduzieren und die Flexibilität des Fahrzeuginnenraumes hinsichtlich Bestuhlung zu erhöhen.

Erfindungsgemäß wird die Aufgabe durch einen abnehmbaren Dreipunkt-Sicherheitsgurt mit den Merkmalen des Anspruchs 1 gelöst.

Indem am oberen Befestigungspunkt ein zweites freies Ende des Gurtbades lösbar an einer Fahrzeugkarosserie befestigt ist, wird vorteilhaft eine leichtere Sitzstruktur erreicht, da gegenüber sitzintegrierten Gurten keine Gurtlast über die Rückenlehne des Sitzes geführt wird. In Bezug auf die US 4,702,491 und EP 0 528 438 ist weiter vorteilhaft, daß die Gurtkraft lediglich einfach auf die Karosserie wirkt. Von daher kann der obere Befestigungspunkt entsprechend einfacher ausgeführt werden.

Eine vorteilhafte Ausgestaltung der Erfindung sieht vor, daß das erste freie Ende des Gurtbandes über die Gurtrolle am ersten Befestigungspunkt befestigt ist.

Eine weitere vorteilhafte Ausgestaltung der Erfindung ist aber auch, wenn das zweite freie Ende des Gurtbandes über eine Gurtrolle an der Fahrzeugkarosserie befestigt ist. Das erste freie Ende des Gurtbandes ist dabei direkt dem ersten Befestigungspunkt zugeordnet.

Damit vorzugsweise der obere Befestigungspunkt in Richtung einer Gurtkraft ausrichtbar ist, ist zweckmäßiger Weise vorgesehen, daß zumindest ein Befestigungspunkt, vorzugsweise der obere Befestigungspunkt um mindestens eine Achse gelenkig bzw. drehbar gelagert ist. Dies kann beispielsweise mittels einer Art Gurtschloßpeitsche oder einer kugelkopfartigen Lagerung erreicht werden. Günstig im Sinne der Erfindung kann vorgesehen sein, daß der gelenkig gelagerte obere Befestigungspunkt mittels Federkraft in einer definierten Position gehalten wird, wobei die definierte Position z.B. manuell einstellbar ist. In einer bevorzugten Ausgestaltung sind hierbei die Komponenten zumindest des dritten, oberen Befestigungspunktes sowohl in der Höhe und/oder in der XY-Richtung einstellbar bzw. positionierbar. Beispielsweise ist eine Höhenverstellung des Gurtes vorgesehen. Dadurch wird eine Anpassung des Schultergurtabschnitts an unterschiedlich große Fahrzeuginsassen ermöglicht. Ferner kann zusätzlich oder alternativ eine Verstellung in Fahrzeuglängsrichtung und/oder quer dazu vorgesehen sein. Selbstverständlich sind nicht nur die dem dritten, oberen Befestigungspunkt zugeordneten Komponenten entsprechend positionierbar. Denkbar ist auch, daß die dem ersten und/oder zweiten Befestigungspunkt zugeordneten Komponenten entsprechend verstellbar bzw. einstellbar sind.

Vorteilhaft ist vorgesehen, daß der erste Befestigungspunkt und das Gurtschloß des zweiten Befestigungspunktes jeweils an gegenüberliegenden Längsseiten des zugeordneten Sitzes angeordnet sind. Der obere Befestigungspunkt ist zweckmäßig in einem Dachrahmen, an einer Seitenwand oder an einem Seitenwandpfosten des Fahrzeugs bzw. der Fahrzeugkaroserie angeordnet.

Vorteilhafter Weise ist der obere Befestigungspunkt derart ausgeführt, daß an Stelle des Gurtes Transportsicherungen und/oder Transportbefestigungen wie z.B. Gepäcknetze, Trennwände, Trenngitter und/oder Verzurrgurte mit dem oberen Befestigungspunkt verbindbar sind. Dies insbesondere dann vorteilhaft, wenn der Sitz ausgebaut oder in eine Nicht-Gebrauchsposition geschwenkt ist, und der zusätzliche Raum als Ladefläche genutzt werden soll, so daß die Ladung hinreichend in dem Fahrzeug gesichert ist.

Durch das bei den beispielhaften Ausgestaltungen erfindungsgemäße Vorsehen des dritten, oberen Befestigungspunktes bzw. Lastaufnahmepunktes an der Fahrzeugkarosserie, beispielsweise an dem Fahrzeugdach oder im Bereich der B-oder C-Säule, wird eine besonders belastbare und einfache Fixierung des Sicherheitsgurtes erreicht. Zusätzliche Verstärkungen des Sitzes sind aus Kostengründen vorteilhaft nicht erforderlich, wobei vorteilhaft die Fahrzeugkarosserie zur Aufnahme der Gurtbelastung im Crashfall benutzt wird, so daß der Gurt bzw. das Gurtsystem im Vergleich zur alleinigen Befestigung an dem Sitz höhere Belastungen aufnehmen kann. Die Verbindung an der Fahrzeugkarosserie ist lösbar, so daß nach Lösen der Verbindung der Sitz leicht mit dem Sicherheitsgurtsystem entnommen werden kann. Vorteilhaft können, aufgrund der Anordnung der unteren Befestigungspunkte bzw. der Befestigungspunkte, welche dem Sitz an seinen jeweils gegenüberliegenden Längsseiten zugeordnet sind, Sicherheitsgurtbefestigungen am Boden des Kraftfahrzeuges, die ein Beladen der durch den entnommenen Sitz entstandenen Ladefläche oder das Ein- und Aussteigen über den so entstandenen Raum behindern könnten, entfallen. Die unteren Befestigungen können auch am Sitz selber sein, wobei die Verbindung zum Boden nur fest genug sein muß.

Sind in der Gurtrolle zusätzliche elektrische Vorrichtungen vorgesehen, beispielsweise elektrisch zündbare Gurtstraffer, müssen deren elektrische Versorge-und Auslöseleitungen nicht aufwendig über den Boden dem Sitz zugeführt werden. Ferner gestaltet sich die De- und Neukontaktierung der Gurtrolle aufgrund deren zugänglicher Anordnung als äußerst einfach. Neben der eigentlichen Gurtbefestigung müssen dann entsprechend elektrische Kontakte vorgesehen sein.

Selbstverständlich liegt es im Sinne der Erfindung, daß die erfindungsgemäß vorgesehenen Gurtzungen bzw. Gurtschlösser, ohne deren funktionelle Wirkungen zu beeinträchtigen, prinzipiell gegeneinander ausgetauscht werden können. Es hat sich jedoch im Sinne einer einfachen Handhabung ergeben, daß im Wesentlichen Gurtzungen bzw. Schloßzungen an dem Dreipunkt-Sicherheitsgurt befestigt sind, da diese aufgrund ihres geringen Gewichts leichter zu handhaben sind und diese aufgrund des geringen Bauvolumens am Gurt vergleichsweise wenig stören.

Zweckmäßig im Sinne der Erfindung ist, wenn der dritte, obere Befestigungspunkt relativ zu einem freien Ende der Rückenlehne des Sitzes höher als dieses angeordnet ist. Bevorzugter Weise kann der dritte, obere Befestigungspunkt oberhalb eines Kopfes des anzugurtenden Fahrzeuginsassen angeordnet sein.

Zweckmäßig im Sinne der Erfindung ist, wenn Gurtstraffer den Komponenten zugeordnet sind, wobei die Gurtstraffer der Gurtrolle oder den Schlössern zugeordnet sein können. Dadurch wird vorteilhaft ein Verletzungsrisiko im Crashfall verringert. Selbstverständlich können dem Dreipunkt-Sicherheitsgurt auch Lastbegrenzer zugeordnet sein.

Günstig im Sinne der Erfindung ist, wenn Sensoren vorgesehen sind, die den jeweiligen Komponenten zugeordnet sind, so daß ein jeweiliger Verbindungszustand überprüfbar ist. Beispielsweise können in den Gurtschlössern elektrische Kontakte und/oder Readrelays vorgesehen sein, die eine Überwachung des Verbindens der Gurtzunge mit dem Gurtschloß, bzw. ein Anlegen des Gurtes, ermöglichen.

Der erfindungsgemäße Dreipunkt-Sicherheitsgurt eignet sich insbesondere zur Verwendung an einem Fahrzeugsitz eines Kraftfahrzeuges, beispielsweise eines Personenkraftwagens oder eines Kleintransporters/Kleinbusses. Natürlich kann kostengünstigerweise auch ein manueller Gurt ohne selbsttätige Längeneinstellung verwendet werden.

Vorteilhafte Ausgestaltungen der Erfindung sind in den Unteransprüchen und der folgenden Figurenbeschreibung offenbart. Es zeigen:
- Fig. 1: Ein Dreipunkt-Sicherheitsgurt in einer ersten Ausgestaltung in einer Frontal- und Seitenansicht,
- Fig. 2: einen Sicherheitsgurt in einer zweiten Ausgestaltung in einer Frontal-und Seitenansicht,
- Fig. 3: einen gelenkigen Befestigungspunkt in einer ersten Ausgestaltung,
- Fig. 4: einen gelenkigen Befestigungspunkt in einer zweiten Ausgestaltung in einer Seitenansicht,
- Fig. 5: den gelenkigen Befestigungspunkt aus Figur 4 in einer Seitenansicht,
- Fig. 6: den gelenkigen Befestigungspunkt aus Figur 5 entlang der Linie A-A,
- Fig. 7: den gelenkigen Befestigungspunkt aus Figur 5 in einer Schnittdarstellung,
- Fig. 8: eine Beweglichkeit innerhalb einer Gurtrolle,
- Fig.9: eine Transportsicherung, die mit dem oberen Befestigungspunkt verbunden ist in einer Seitenansicht, und
- Fig. 10: die Transportsicherung aus Figur 9 in einer Frontansicht.

In den unterschiedlichen Figuren sind gleiche Teile stets mit denselben Bezugszeichen versehen, so daß diese in der Regel auch nur einmal beschrieben werden.

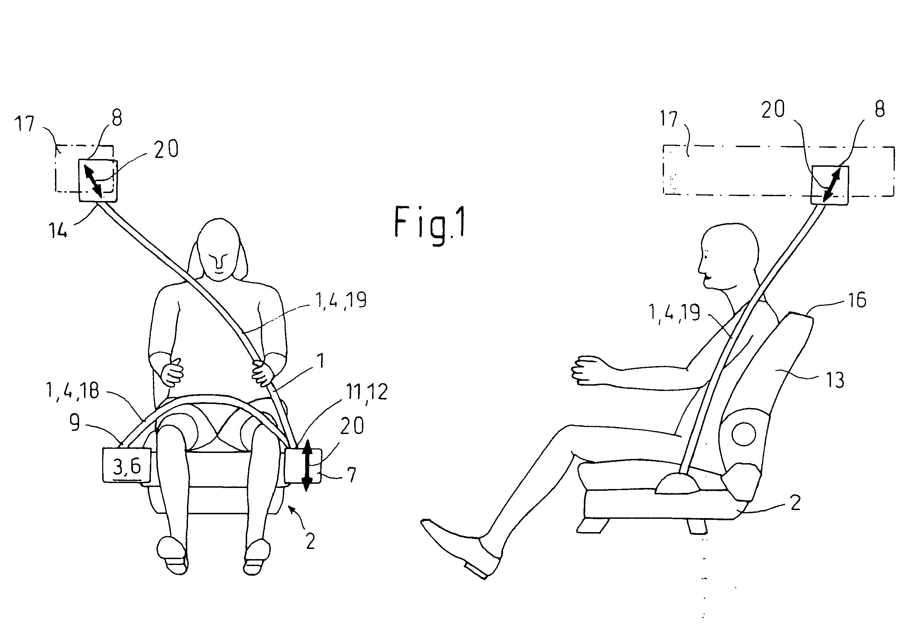

Figur 1 zeigt einen abnehmbaren Dreipunkt-Sicherheitsgurt 1 in einem nicht dargestellten Fahrzeug, der einem Sitz 2 zugeordnet ist. Der Dreipunkt-Sicherheitsgurt 1 wird im Folgenden als Gurt 1 bezeichnet. Dem Gurt 1 ist eine Gurtrolle 3 zugeordnet, die ein Gurtband 4 auf- bzw. abrollbar lagert. Das Gurtband 4 ist mit drei Befestigungspunkten 6,7,8 am Fahrzeug befestigt. Ein erstes freies Ende 9 des Gurtbandes 4 ist an einem ersten Befestigungspunkt 6 seitlich neben dem Sitz 2 befestigt, wobei das Gurtband 4 über eine Gurtschnalle 11 mit dem zweiten Befestigungspunkt 7 auf der zum ersten Befestigungspunkt 6 gegenüberliegenden Seite des Sitzes 2 lösbar an einem Gurtschloß 12 befestigt ist. Der dritte Befestigungspunkt 8 ist seitlich oberhalb einer Rückenlehne 13 des Sitzes 2 an einer Fahrzeugkarosserie 17 angeordnet. Der dritte Befestigungspunkt 8 wird im Folgenden als oberer Befestigungspunkt 8 bezeichnet. Am oberen Befestigungspunkt 8 ist ein zweites freies Ende 14 des Gurtbandes 4 lösbar an der Fahrzeugkarosserie 17 befestigt.

In dem in Figur 1 dargestellten Ausführungsbeispiel ist die Gurtrolle 3 dem ersten Befestigungspunkt 6 zugeordnet. Das erste freie Ende 9 des Gurtbandes 4 ist am ersten Befestigungspunkt 6 über die Gurtrolle 3 befestigt. Der erste und zweite Befestigungspunkt 6 bzw. 7 ist jeweils an dem Sitz 2 angeordnet. Das Gurtschloß 12 des zweiten Befestigungspunktes 7 ist an dem zugeordneten Sitz 2 angeordnet.

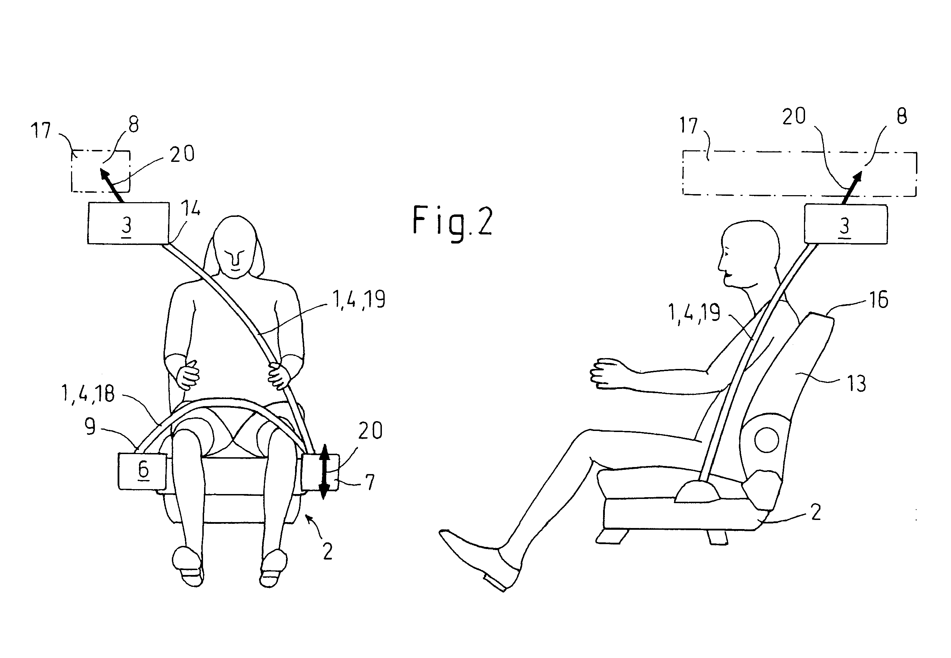

Bei dem in Figur 2 dargestellten Ausführungsbeispiel ist die Gurtrolle 3 dem zweiten freien Ende 14 des Gurtes 1 zugeordnet. Die Gurtrolle 3 ist mit der Fahrzeugkarosserie 17 lösbar verbunden, so daß das zweite freie Ende 14 des Gurtbandes 4 über die Gurtrolle 3 mit der Fahrzeugkaroserie 17 lösbar verbunden ist.

Sowohl in Figur 1 als auch in Figur 2 ist ein Fahrzeuginsasse durch den erfindungsgemäßen Gurt 1 sicher an dem Sitz 2 angegurtet. Beiden Ausführungsbeispielen ist gemeinsam, daß der obere Befestigungspunkt 8 oberhalb eines freien Endes 16 der Rückenlehne 13 des Sitzes 2 bzw. bevorzugt oberhalb des Kopfes des Fahrzeuginsassen angeordnet ist.

Mittels der Gurtschnalle 11 wird der Gurt 1 in einer Gebrauchsposition in einen Beckengurtabschnitt 18 und in einen Schultergurtabschnitt 19 unterteilt. Der Schultergurtabschnitt 19 weist das zweite freie Ende 14 des Gurtbandes 4 auf.

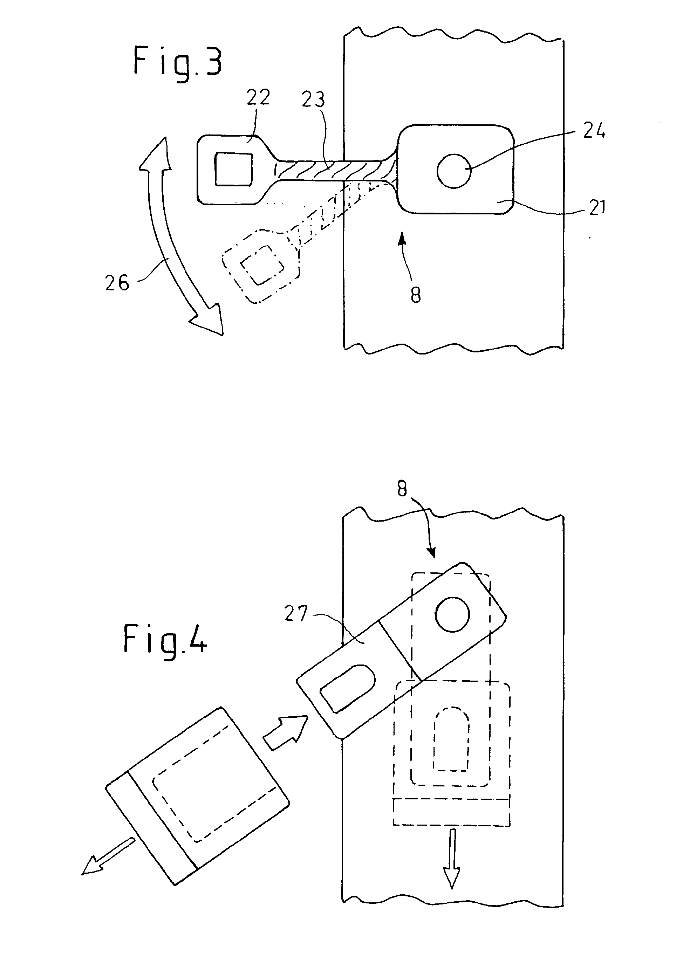

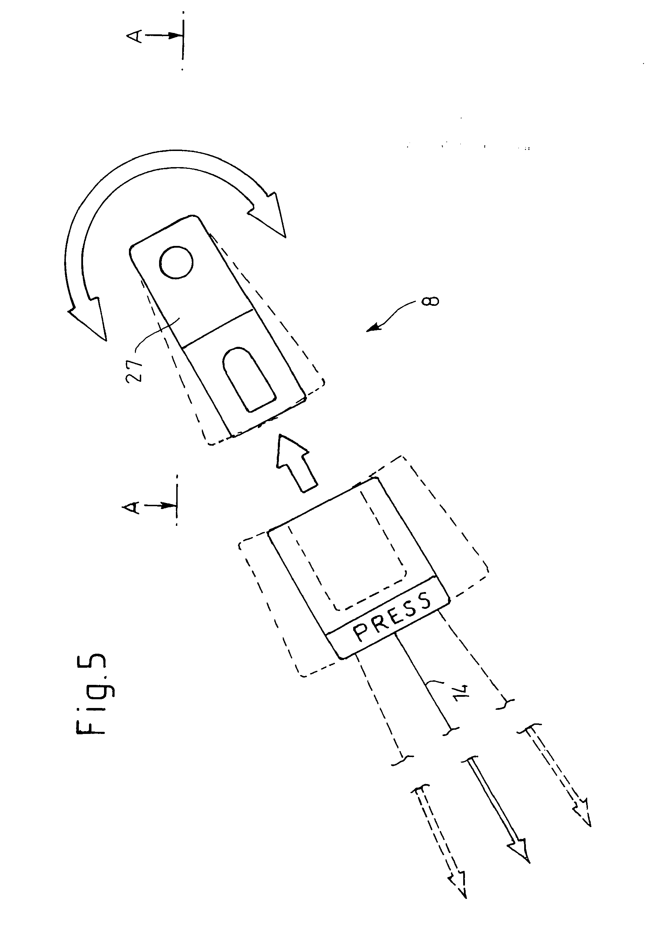

Der Schultergurtabschnitt 19 ist bei dem in den Figuren 1 und 2 jeweils dargestellten Ausführungsbeispiel mit dem oberen Befestigungspunkt 8 lösbar verbunden. Bei dem in Figur 1 dargestellten Ausführungsbeispiel kann diese lösbare Verbindung beispielsweise dadurch erreicht werden, daß dem freien Ende eine Schloßzunge zugeordnet ist, die mit einem dazu korrespondierenden Gurtschloß lösbar verbindbar ist. Bei dem in Figur 2 dargestellten Ausführungsbeispiel dagegen ist dem zweiten freien Ende 14 des Schultergurtabschnitts 19 bzw. des Gurtbandes 4 direkt der Gurtrolle 3 zugeordnet, der ebenfalls zur Verbindung mit dem Fahrzeug bzw. seiner Fahrzeugkarosserie ein entsprechendes Verbindungselement zugeordnet sein kann, welches beispielsweise wiederum aus den Komponenten Schloßzunge bzw. Gurtschloß bestehen kann. Auf eine bevorzugte Verbindung des zweiten freien Endes 14 mit dem oberen Befestigungspunkt 8 wird zu den Figuren 3 bis 8 näher eingegangen.

Somit ist bei beiden Ausführungsbeispielen gemäß den Figuren 1 und 2 sichergestellt, daß der Gurt 1 von dem oberen Befestigungspunkt 8 lösbar ist, wenn beispielsweise der Sitz 2 aus dem Fahrzeug entfernt werden soll, oder dieser in eine Nicht-Gebrauchsposition geschwenkt werden soll, wobei der Gurt 1 dann in einer Park-Position am Sitz 2 angeordnet sein kann. Der obere Befestigungspunkt 8 kann in einem Dachrahmen, an einer Seitenwand oder an einem Seitenwandpfosten angeordnet sein.

Selbstverständlich kann die Gurtrolle 3 bei den Ausführungsbeispielen zu den Figuren 1 und 2 sowohl direkt am Sitz 2 oder an der Fahrzeugkarosserie bzw. an einem Fahrzeugboden befestigt werden. Natürlich können die in den gezeigten Ausführungsbeispielen jeweils den sich gegenüberliegenden Längsseiten des Sitzes 2 zugeordneten Komponenten seitenvertauscht angeordnet werden. Der Gurt 1 ist aus zwei Befestigungspunkten und zwar aus dem oberen Befestigungspunkt 8 und aus dem zweiten Befestigungspunkt 7 lösbar, was jeweils mittels des Pfeils 20 dargestellt ist. Sofern gewünscht, kann der Gurt 1 auch aus dem ersten Befestigungspunkt 6 gelöst werden.

In den Figuren 3, 4 und 8 sind unterschiedlich ausgestaltete obere Befestigungspunkte 8 dargestellt.

Der obere Befestigungspunkt 8 nach dem Ausführungsbeispiel gemäß der Figur 3 ist in der Art einer Gurtpeitsche ausgeführt und weist ein Befestigungsende 21 und ein dazu gegenüberliegendes Verbindungsende 22 auf. Zwischen dem Befestigungsende 21 und dem Verbindungsende 22 ist ein flexibles Zwischenelement 23, beispielsweise ein Drahtseil angeordnet, so daß das Verbindungsende 22 um zumindest eine Achse beweglich gelagert ist.

Das Befestigungsende 21 ist plattenähnlich ausgeführt und weist eine Zentralbohrung 24 auf, durch welche bevorzugt eine Schraube führbar ist, die mit der Fahrzeugkarosserie verschraubbar ist. Das Verbindungsende 22 ist in der Art einer Schloßzunge ausgeführt, so daß ein an dem zweiten freien Ende 14 angeordnetes Gurtschloß mit dem oberen Befestigungspunkt 8 lösbar verbindbar ist. Mittels des flexiblen Zwischenelementes 23 ist das Verbindungsende 22 bevorzugt dreidimensional bzw. insbesondere flexibel positionseinstellbar, was mittels des Doppelpfeils 26 angedeutet ist. In Figur 3 sind zwei mögliche Positionen des Verbindungsendes 22 dargestellt. Natürlich ist der obere Befestigungspunkt 8 in der beispielhaften Ausführung nach Figur 3 für die jeweiligen Ausgestaltungen gemäß den Figuren 1 und 2 einsetzbar.

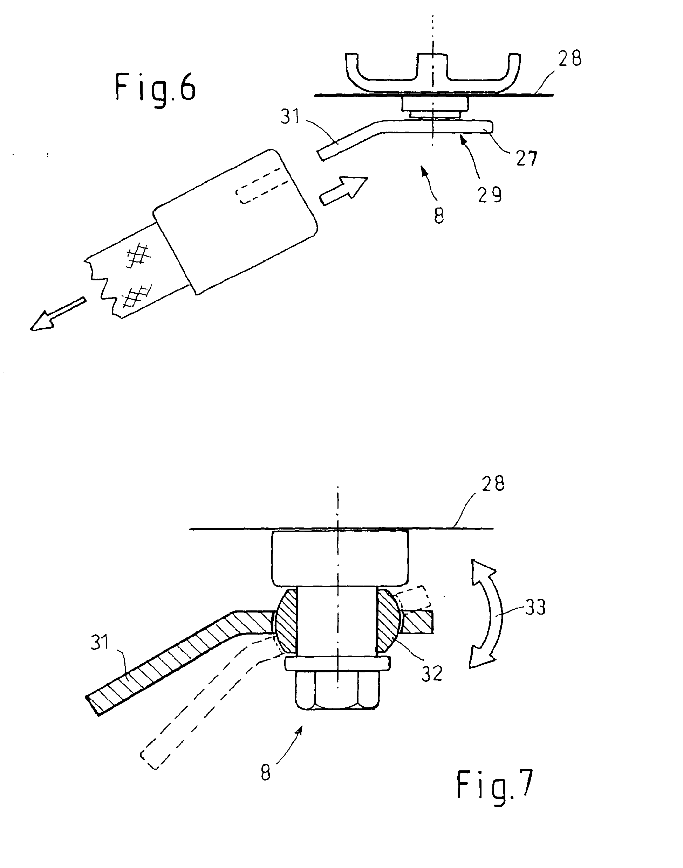

Der obere Befestigungspunkt 8 nach dem Ausführungsbeispiel gemäß den Figuren 4 bis 7 ist als gelenkig gelagerter Befestigungspunkt 8 ausgeführt und weist eine winklige Platte 27 auf, die einen parallel zu einer Anschlagfläche 28 der Fahrzeugkarosserie 17 verlaufenden Befestigungsbereich 29 und einen davon abgewinkelten Verbindungsbereich 31 (Figur 6) aufweist. Die Anschlagfläche 28 kann wiederum an dem Dachrahmen, in der Seitenwand oder an dem Seitenwandpfosten angeordnet sein, könnte aber auch an einer Höhenverstellung befestigt sein. Der Befestigungsbereich 29 ist in einer Kugelkopflagerung 32 (Figur 7) gehalten, so daß die Platte 27 zumindest um eine Achse gelenkig gelagert, vorzugsweise dreidimensional beweglich ist, was mittels des Doppelpfeils 33 angedeutet ist. Der Befestigungsbereich 29 ist mit der Anschlagfläche 28 verschraubt. Der Verbindungsbereich 31 ist als Schloßzunge ausgeführt, so daß das zweite freie Ende 14 des Gurtbandes 4 bzw. des Schultergurtabschnittes 19 mit dem oberen Befestigungspunkt 8 lösbar verbindbar ist, indem dem zweiten freien Ende 14 das korrespondierende Gurtschloß (Figur 1) oder die mit dem korrespondierenden Gurtschloß versehene Gurtrolle 3 (Figur 2) zugeordnet ist. Mittels eines Kraftspeicherelementes, beispielsweise einem Federelement (Federkraft), kann eine eingestellte Position gehalten werden. In den Figuren 4, 5 und 7 sind mögliche Positionen dünn gezeichnet bzw. gestrichelt dargestellt.

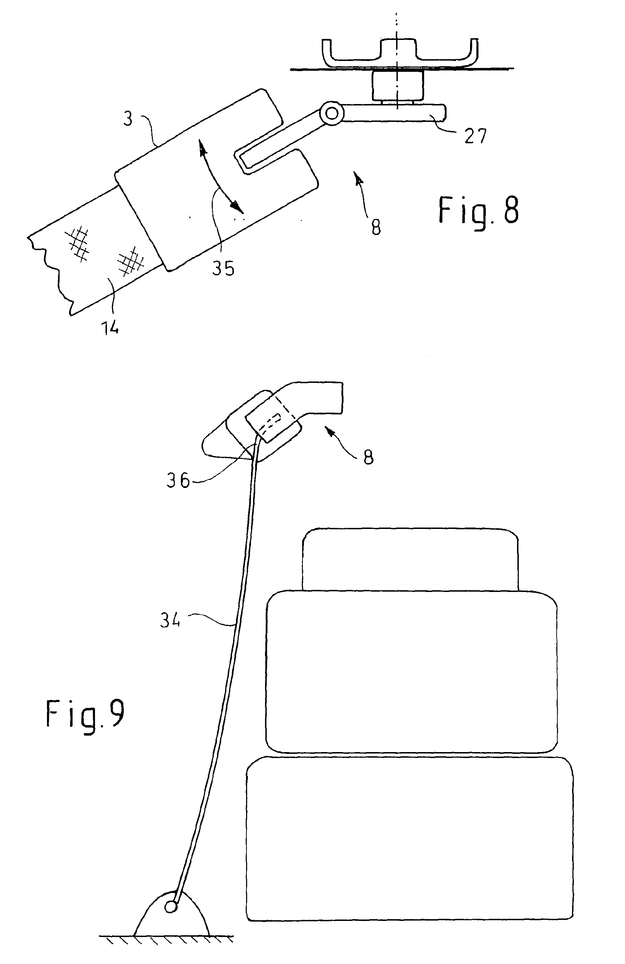

In dem Ausführungsbeispiel nach Figur 8 ist ein fixierter oberer Befestigungspunkt 8 dargestellt, der ebenfalls eine winklige Platte 27 wie zu den Figuren 4 bis 7 beschrieben aufweist. Allerdings ist die Platte 27 über ihren Befestigungsbereich 29 unbeweglich mit der jeweiligen Anschlagfläche 28 verbunden. Der Verbindungsbereich 31 ist dabei mit einem entsprechenden Gurtschloß verbindbar, wobei innerhalb des Gurtschlosses eine Beweglichkeit bereitgestellt wird. In dem in Figur 8 dargestellten Ausführungsbeispiel ist die Gurtrolle 3 mit einem entsprechenden Gurtschloß versehen, wobei innerhalb der Gurtrolle 3 eine erforderliche Beweglichkeit zumindest um eine Achse, vorzugsweise eine dreidimensionale Beweglichkeit zur Verfügung gestellt wird, was mittels des Doppelpfeils 35 angedeutet ist.

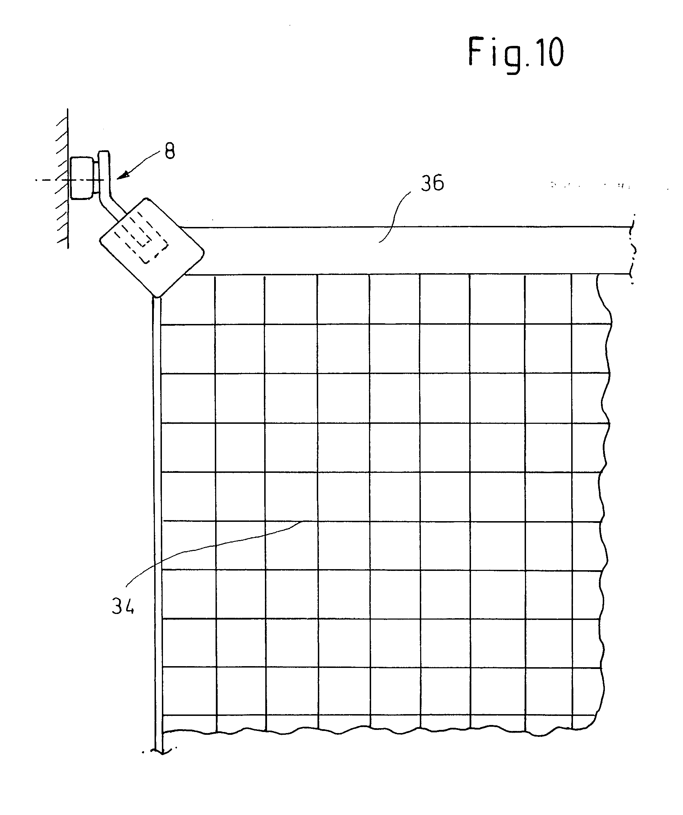

Die in den Figuren 3 bis 8 dargestellten oberen Befestigungspunkte 8 können mit ihren Komponenten jedem Sitz des Fahrzeugs zugeordnet werden, wobei der obere Befestigungspunkt 8 einem Mittelsitz sinnvoller Weise an dem Dachrahmen angeordnet ist, so daß jeder Sitz beispielsweise aus dem Fahrzeug entfernbar, oder zur Schaffung einer vergrößerten Ladefläche umklappbar ist. Natürlich ist dann der Sicherheitsgurt 1 aus dem oberen Befestigungspunkt 8 gelöst. Vorteilhaft ist der obere Befestigungspunkt 8 somit zur Befestigung einer Transportsicherung oder Transportbefestigung wie z.B. Gepäcknetze, Trennwände, Trenngitter und/oder Verzurrgurte etc. verwendbar. Eine Ausführung der Transportsicherung als Gepäcknetz 34 ist beispielsweise in den Figuren 9 und 10 dargestellt. Hierbei ist das Gepäcknetz 34 vorzugsweise ausrollbar an einem Fahrzeugboden gelagert, wobei ein freies Ende 36 des Gepäcknetzes 34 zur lösbaren Verbindung mit dem oberen Befestigungspunkt 8 an diesen bzw. diese angepaßte Verbindungselemente beispielsweise Gurtschlösser aufweist.

## Patentansprüche

1. Fahrzeug mit einem abnehmbaren Dreipunkt-Sicherheitsgurt (1) für einen zugeordneten Sitz (2), wobei der Sicherheitsgurt (1) ein Gurtband (4) aufweist, das an drei Befestigungspunkten (6, 7, 8) des Fahrzeugs befestigt ist, wobei ein erstes freies Ende (9) des Gurtbandes (4) an einem ersten Befestigungspunkt (6) seitlich neben dem Sitz (2) befestigt ist, das Gurtband (4) über eine Gurtschnalle (11) mit einem zweiten Befestigungspunkt (7) auf der gegenüberliegenden Seite des Sitzes (2) lösbar an einem Gurtschloß (12) befestigbar ist, und einem dritten, oberen Befestigungspunkt (8), der seitlich oberhalb einer Rückenlehne (16) des Sitzes (2) angeordnet ist, wobei am oberen Befestigungspunkt (8) ein zweites freies Ende (14) des Gurtbandes (4) lösbar an der Fahrzeugkarosserie (17) befestigt ist
**dadurch gekennzeichnet, daß**
zumindest ein Befestigungspunkt (8) um mindestens eine Achse gelenkig gelagert ist, so daß dieser in Richtung einer Gurtkraft ausrichtbar ist, wobei dieser gelenkig gelagerte Befestigungspunkt (8) mittels Federkraft in einer definierten Winkelposition gehalten wird.

2. Fahrzeug nach Anspruch 1,
**dadurch gekennzeichnet, daß**
das erste freie Ende (9) des Gurtbandes (4) am ersten Befestigungspunkt (6) über eine Gurtrolle (3) befestigt ist.

3. Fahrzeug nach Anspruch 1,
**dadurch gekennzeichnet, daß**
das zweite freie Ende (14) des Gurtbandes (4) am oberen Befestigungspunkt (8) über eine Gurtrolle (3) befestigt ist.

4. Fahrzeug nach einem der vorherigen Ansprüche,
**dadurch gekennzeichnet, daß**
der erste Befestigungspunkt (6) am zugeordneten Sitz (2) angeordnet ist.

5. Fahrzeug nach einem der vorherigen Ansprüche,
**dadurch gekennzeichnet, daß**
das Gurtschloß (12) des zweiten Befestigungspunktes (7) am zugeordneten Sitz (2) angeordnet ist.

6. Fahrzeug nach einem der vorherigen Ansprüche,
**dadurch gekennzeichnet, daß**
der obere Befestigungspunkt (8) in einem Dachrahmen oder an einer Seitenwand oder an einem Seitenwandpfosten des Fahrzeugs angeordnet ist.

7. Fahrzeug nach einem der vorherigen Ansprüche,
**dadurch gekennzeichnet, daß**
der obere Befestigungspunkt (8) derart ausgeführt ist, daß Transportsicherungen und/oder Transportbefestigungen mit diesem verbindbar sind.

## Claims

1. Vehicle with a removable three-point seatbelt (1) for an associated seat (2), the seatbelt (1) having a belt strap (4) which is fastened to three fastening points (6, 7, 8) on the vehicle, a first free end (9) of the belt strap (4) being fastened to a first fastening point (6) laterally next to the seat (2), the belt strap (4) being fastenable releasably to a belt buckle (12) by a second fastening point (7) on the opposite side of the seat (2) via a belt clasp (11), and by a third, upper fastening point (8) which is arranged laterally above a backrest (16) of the seat (2), and a second free end (14) of the belt strap (4) being fastened releasably to the vehicle body (17) at the upper fastening point (8), **characterized in that** at least one fastening point (8) is mounted in an articulated manner about at least one axis, so that it can be aligned in the direction of a belt force, said fastening point (8) which is mounted in an articulated manner being held in a defined angular position by means of spring force.

2. Vehicle according to claim 1, **characterized in that** the first free end (9) of the belt strap (4) is fastened to the first fastening point (6) via a belt roller (3).

3. Vehicle according to claim 1, **characterized in that** the second free end (14) of the belt strap (4) is fastened to the upper fastening point (8) via a belt roller (3).

4. Vehicle according to one of the preceding claims, **characterized in that** the first fastening point (6) is arranged on the associated seat (2).

5. Vehicle according to one of the preceding claims, **characterized in that** the belt buckle (12) of the second fastening point (7) is arranged on the associated seat (2).

6. Vehicle according to one of the preceding claims, **characterized in that** the upper fastening point (8) is arranged in a roof frame or on a side wall or on a side wall post of the vehicle.

7. Vehicle according to one of the preceding claims, **characterized in that** the upper fastening point (8) is designed in such a manner that transportation securing means and/or transportation fastening means can be connected to it.

## Revendications

1. Véhicule avec une ceinture de sécurité à trois points détachable (1) pour un siège associé (2), dans lequel la ceinture de sécurité (1) comprend une bande de ceinture (4), qui est fixée en trois points de fixation (6, 7, 8) du véhicule, dans lequel une première extrémité libre (9) de la bande de ceinture (4) est fixée en un premier point de fixation (6) latéralement à côté du siège (2), la bande de ceinture (4) peut être fixée de façon détachable à une serrure de ceinture (12) au moyen d'une boucle de ceinture (11) en un deuxième point de fixation (7) sur le côté opposé du siège (2), et en un troisième point de fixation supérieur (8), qui est disposé latéralement au-dessus d'un dossier (16) du siège (2), dans lequel une deuxième extrémité libre (14) de la bande de ceinture (4) est fixée de manière détachable à la carrosserie du véhicule (17) au point de fixation supérieur (8), **caractérisé en ce qu'**au moins un point de fixation (8) est monté de façon articulée autour d'au moins un axe, de telle manière qu'il puisse être orienté dans la direction d'une force de ceinture, dans lequel ce point de fixation monté de façon articulée (8) est maintenu dans une position angulaire définie au moyen d'une force de ressort.

2. Véhicule selon la revendication 1, **caractérisé en ce que** la première extrémité libre (9) de la bande de ceinture (4) est fixée au premier point de fixation (6) au moyen d'un rouleau de ceinture (3).

3. Véhicule selon la revendication 1, **caractérisé en ce que** la deuxième extrémité libre (14) de la bande de ceinture (4) est fixée au point de fixation supérieur (8) au moyen d'un rouleau de ceinture (3).

4. Véhicule selon l'une quelconque des revendications précédentes, **caractérisé en ce que** le premier point de fixation (6) est disposé sur le siège associé (2).

5. Véhicule selon l'une quelconque des revendications précédentes, **caractérisé en ce que** la serrure de ceinture (12) du deuxième point de fixation (7) est disposée sur le siège associé (2).

6. Véhicule selon l'une quelconque des revendications précédentes, **caractérisé en ce que** le point de fixation supérieur (8) est disposé dans un cadre du toit ou sur une paroi latérale ou sur un montant de paroi latérale du véhicule.

7. Véhicule selon l'une quelconque des revendications précédentes, **caractérisé en ce que** le point de fixation supérieur (8) est réalisé de telle manière que des sangles de transport et/ou des fixations de transport puissent être attachées à ce dernier.
